**Europäisches Patentamt**

**European Patent Office**

**Office européen des brevets**

(19)

(11) Veröffentlichungsnummer : **0 210 177 B1**

## (12) EUROPÄISCHE PATENTSCHRIFT

(45) Veröffentlichungstag der Patentschrift :
**17.08.88**

(21) Anmeldenummer : **85904602.1**

(22) Anmeldetag : **11.09.85**

(86) Internationale Anmeldenummer :
**PCT/DE 85/00316**

(87) Internationale Veröffentlichungsnummer :
**WO/8604645 (14.08.86 Gazette 86/18)**

(51) Int. Cl.⁴ : **F 02 D 43/00, F 02 D 21/08**

(54) **VORRICHTUNG UND VERFAHREN ZUR BEEINFLUSSUNG VON BETRIEBSKENNGRÖSSEN VON BRENNKRAFTMASCHINEN.**

(30) Priorität : **05.02.85 DE 3503798**

(43) Veröffentlichungstag der Anmeldung :
**04.02.87 Patentblatt 87/06**

(45) Bekanntmachung des Hinweises auf die Patenterteilung : **17.08.88 Patentblatt 88/33**

(84) Benannte Vertragsstaaten :
**DE FR GB**

(56) Entgegenhaltungen :
**FR-A- 2 391 362**
**GB-A- 214 056**
**US-A- 4 142 495**
**US-A- 4 164 032**
**US-A- 4 322 799**
**US-A- 4 377 145**
**US-A- 4 390 001**
**US-A- 4 416 239**

(73) Patentinhaber : **ROBERT BOSCH GMBH**
**Postfach 50**
**D-7000 Stuttgart 1 (DE)**

(72) Erfinder : **JEENICKE, Edmund**
**Stuttgarter Strasse 102**
**D-7141 Schwieberdingen (DE)**

## Beschreibung

Stand der Technik

Die Erfindung geht aus von einer Vorrichtung bzw. einem Verfahren zur Beeinflussung von Betriebskenngrößen von Brennkraftmaschinen gemäß der Gattung des ersten Vorrichtungs- bzw. Verfahrensanspruchs, gemäß GB-A-2 143 056.

Um die Belastung der Umwelt aufgrund der Schadstoffemissionen von Brennkraftmaschinen zu senken, stehen verschiedene Maßnahmen zur Reduzierung dieser Schadstoffemission zur Verfügung, die alle darauf abzielen, mit möglichst geringfügigen Veränderungen der Gebrauchswerte wie z. B. Kraftstoffverbrauch, Fahrleistung, Fahrverhalten und Preis ein Optimum an Abgasqualität zu erhalten. Neben anderen Methoden hat sich insbesondere die Abgasrückführung zur Verringerung der Schadstoffemission bewährt. Hierbei wird ein Teil der Abgase von der Auspuffzur Saugseite zurückgeführt, wobei die rückgeführte. Abgasmenge durch pneumatisch oder elektrisch angesteuerte Abgasrückführungsventile reguliert wird. Durch diese Maßnahme ergibt sich eine Senkung der Temperatur und der Spitzendrücke im Brennraum und somit eine reduzierte Emission insbesondere von Stickoxyden.

So ist z. B. eine Steuereinrichtung für die Treibstoffzufuhr zur Verwendung in einem Verbrennungsmotor mit Abgasrückführung bekannt, die einen Ansaugunterdruck-Meßgeber zum Messen des Ansaugunterdrucks, einen Differenzdruck-Meßgeber zum Messen des Druckunterschiedes der Drücke im Abgasrückführungskanal und im Ansaugrohr, einen Drehzahlmesser zur Erfassung der Drehzahl des Motors und eine Einrichtung zum Bestimmen der Treibstoffmenge aufweist, welche dem Motor in Abhängigkeit von diesen drei Meßgrößen die erforderliche Kraftstoffmenge zuteilt.

Als nachteilig an dieser bekannten Steuereinrichtung hat sich erwiesen, daß zusätzlich zum ohnehin vorhandenen, als Druckgeber ausgebildeten Lastsensor ein weiterer Sensor zur Erfassung der Menge des rückgeführten Abgases eingesetzt werden muß. Weiterhin erfordert dieser recht aufwendig gestaltete, als Differenzdruckgeber ausgebildete Sensor zusätzliche konstruktive Maßnahmen am Abgasrückführungsrohr, damit seine Funktionstüchtigkeit gewährleistet ist.

Ferner ist aus der GB-A-2 143 056 eine Einrichtung zum Bestimmen der Kraftstoffmenge sowie der Abgasrückführrate bekanntgeworden. Dort wird als Lastsignal der Druck im Ansaugrohr der Brennkraftmaschine ermittelt und abhängig von Last und Drehzahl Einspritzmenge und Abgasrückführrate bestimmt. Zur Ermittlung des Lastzustandes wird nun nicht ein einzelner Druckwert verwendet, sondern aus einer Folge von Einzelwerten eine bestimmte Mittelung zur Korrektur der Einzelmeßwerte vorgenommen. Problematisch ist diese Einrichtung nun deshalb, weil zwangsläufig die Menge des zurückgeführten Abgases den Druck im Ansaugrohr mit bestimmt, so daß der reine Frischluftanteil, der letztlich entscheidend ist für die Größe der Kraftstoffzumessung, nicht exakt ermittelbar ist.

Gemäß US-A-4 164 032 wird zur Regelung der EGR-Rate ein gemessener Druckwert mit einem fest abgespeicherten Sollwert verglichen.

Aufgabe der Erfindung ist es deshalb, bei einer Vorrichtung sowie einem Verfahren der gattungsgemäßen Art einen Weg zu finden, wie mit nur einem Drucksensor und aus aufeinanderfolgenden Messungen der Frischluft- bzw. Abgasanteil ermittelt werden kann.

Gelöst wird diese Aufgabe mit den Merkmalskombinationen der beiden selbständigen Ansprüche.

Vorteile der Erfindung

Mit der erfindungsgemäßen Vorrichtung bzw. den erfindungsgemäßen Verfahren zur Beeinflussung von Betriebskenngrößen von Brennkraftmaschinen ergibt sich gegenüber dem Stand der Technik der Vorteil, daß auch bei Verwendung eines einzigen Drucksensors exakte Daten bezüglich der Abgasrückführmenge und damit indirekt bezüglich des Frischluftanteils erreichbar sind. Da ein derartiger Drucksensor in druck-drehzahlgesteuerten Systemen ohnehin vorhanden ist, erreicht der konstruktive mechanische Aufwand für den Einsatz eines Abgasrückführungssystems ein Minimum.

Durch den Einsatz eines einzigen Drucksensors in Verbindung mit einem Steuergerät, in dem die Meßwerte weiterverarbeitet werden, ist eine sehr flexible Datenanalyse möglich. Hierdurch wird eine unkomplizierte Anpassung an verschiedene Brennkraftmaschinentypen in Verbindung mit einer hohen Zuverlässigkeit und Genauigkeit gewährleistet.

Weitere Vorteile der Erfindung ergeben sich aus den in den Unteransprüchen aufgeführten Ausbildungen der Erfindung. Durch die zeitlich aufeinanderfolgende Messung der wenigstens zwei Druckwerte, insbesondere bei eingeschalteter und ausgeschalteter Abgasrückführung wird einerseits die Weiterverarbeitung der Meßsignale vereinfacht und andererseits eine Kontrollfunktion bezüglich der Funktionstüchtigkeit des Druckgebers ausgeübt.

Als äußerst vorteilhaft ist auch die Mittelwertbildung über mehrere Meßwertepaare anzusehen, da hierdurch mögliche Fehlerquellen aufgrund dynamischer Vorgänge eliminiert werden können. Ein weiterer Vorteil ergibt sich aus der Einführung einer adaptiven Anpassung der für die Abgasrückführmenge verantwortlichen, betriebsparameterabhängigen Steuerwerte. Hierdurch werden Langzeitdriften aufgrund von Alterung und Verschmutzung beispielsweise des Abgasrückführungsventils korrigiert.

Diese Vorteile und weitere Vorzüge bzw. vorteilhafte Weiterbildungen und Verbesserungen der Erfindung werden in den Unteransprüchen in Verbindung mit der Beschreibung des Ausführungsbeispiels und der Zeichnung offenbart.

Zeichnung

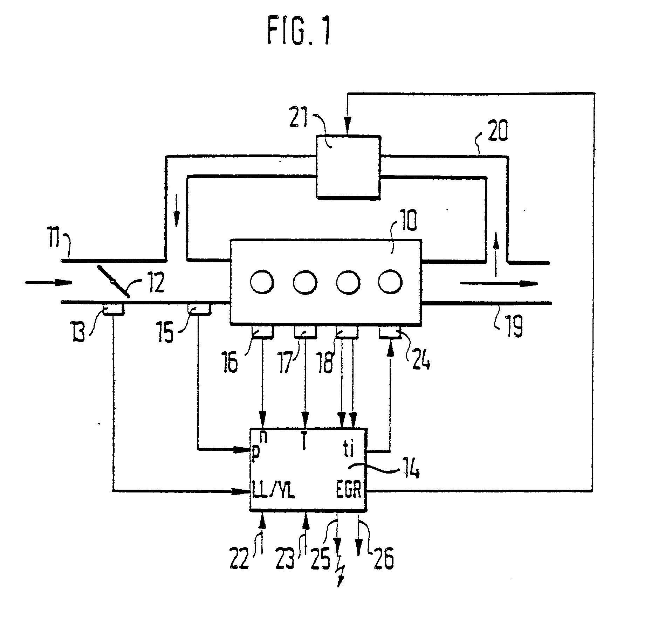

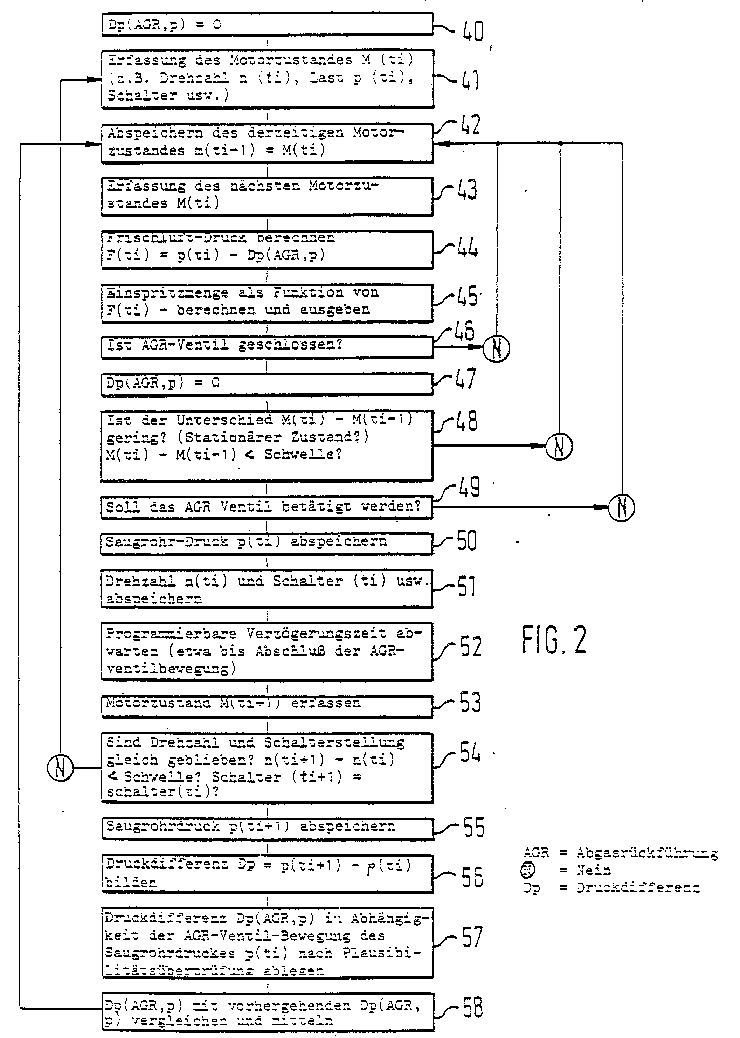

Ein Ausführungsbeispiel der Erfindung ist in der Zeichnung dargestellt und in der nachfolgenden Beschreibung näher erläutert. Es zeigen Figur 1 ein vereinfachtes Blockschaltbild der erfindungsgemäßen Vorrichtung und Figur 2 ein Flußdiagramm zur Erläuterung des erfindungsgemäßen Verfahrens.

Beschreibung des Ausführungsbeispieles

Das Ausführungsbeispiel betrifft eine Vorrichtung zur Beeinflussung von Betriebskenngrößen von Brennkraftmaschinen. In Figur 1 ist mit 10 eine Brennkraftmaschine bezeichnet, der über einen Einlaßkanal 11 die zur Verbrennung des Kraftstoffs notwendig Frischluft zugeführt wird. Im Einlaßkanal 11 ist eine Drosselklappe 12 angeordnet. Ein Drosselklappenschalter 13 erfaßt die Vollast- bzw. Leerlaufstellung der Drosselklappe und ist ausgangsseitig an einen Signaleingang eines Steuergerätes 14 angeschlossen. Dem Steuergerät 14 werden weitere Eingangsgrößen von einem Drucksensor 15, einem Drehzahlsensor 16, einem Temperatursensor 17 und einem nicht näher spezifizierten Sensor 18 zugeführt. Bei dem Sensor 18 kann es sich einen Klopfsensor, einen Abgassensor oder ähnliches handeln. Das in der Brennkraftmaschine verbrannte Luft-Kraftstoff-Gemisch wird über einen Auslaßkanal 19 ins Freie ausgestoßen. Vom Auslaßkanal 19 zweigt ein Abgasrückführungskanal 20 ab, der unterhalb der Drosselklappe 12 in den Ansaugkanal 11 der Brennkraftmaschine 10 mündet. Im Abgasrückführungskanal 20 ist ein Ventil 21 zur Steuerung der vom Auslaßkanal 19 zum Einlaßkanal 11 rückgeführten Abgasmenge angebracht.

Ausgehend von den Größen Einlaßkanalunterdruck, die der stromab der Einmündung des Abgasrückführungskanals 20 im Eintrittskanal 11 angeordnete Drucksensor 15 liefert, und drehzahlproportionalen Signalen des Drehzahlsensors 16 sowie von anderen, durch Pfeile 22 und 23 gekennzeichneten Korrekturgrößen bzw. Gebersignalen der Geber 17, 18 berechnet oder wählt das Steuergerät 14 Werte für die zuzumessende Kraftstoffmenge aus, die sich für den Sonderfall eines Einspritzsystems als die Öffnungszeiten $t_i$ für die Einspritzventile 24 darstellen. Die Erfindung ist jedoch nicht auf Einspritzsysteme, sei es nun Saugrohreinspritzung oder Einzelzylindereinspritzung beschränkt, sondern findet auch für Vergasersysteme Anwendung. Neben anderen Ausgangsgrößen, wie z. B. dem Zündzeitpunkt 25 oder Steuergrößen 26 für ein automatisches Getriebe ermittelt das Steuergerät 14 Werte für die Ventilstellung des Abgasrückführventils 21 und gibt entsprechende Signale aus.

Ausgehend von den schon seit langem bekannten elektronischen Kraftstoffzumeßsystemen, die die zuzumessende Kraftstoffmenge in Abhängigkeit vom Ansaugrohrunterdruck und der Drehzahl zumessen, sollen im weiteren nur die Modifikationen erläutert werden, die erfindungsgemäß vorgesehen sind, um die Zusatzfunktion der Abgasrückführung zu integrieren. Da die Abgasrückführung bei vielen, häufiger auftretenden Motorbetriebszuständen wie z. B. Leerlauf, Warmlauf und Vollast ganz abgeschaltet wird, treten natürlich in diesen Zuständen keine Unterschiede gegenüber einem System ohne Abgasrückführung auf. Bei abgeschalteter Abgasrückführung wird dementsprechend der Saugrohrdruck erfaßt und der Brennkraftmaschine 10 über die Einspritzventile 24 die in Verbindung mit der jeweils vorliegenden Drehzahl erforderliche Kraftstoffmenge zugeteilt. Nach Einschalten der Abgasrückführung, insbesondere im Teillastbereich, wird der Saugrohrdruck abermals erfaßt und die jeweilige Differenz zum vorhergehenden Druckwert ohne Abgasrückführung bestimmt. Der Zeitunterschied zwischen der Erfassung der beiden Druckwerte mit und ohne Abgasrückführung ist minimal und beträgt nur Bruchteile von Sekunden. Die beiden Druckwerte bzw. deren Differenz wird im Festwertspeicher (RAM, EE Prom) abgelegt und stehen zur Weiterverarbeitung zur Verfügung. Die Differenz der beiden Druckwerte bestimmt nicht nur die Menge des rückgeführten Abgases sondern insbesondere auch den Wert der Frischluft als Differenz der der Brennkraftmaschine zugeführten Gesamtluftmenge und der rückgeführten Abgasmenge. Über diesen Wert für die zugemessene Frischluftmenge läßt sich insbesondere auch die der Brennkraftmaschine zuzumessende Kraftstoffmenge bestimmen. Durch die experimentelle Erfassung des Ansaugrohrunterdrucks mit und ohne Abgasrückführung durch einen einzigen Drucksensor werden somit die beiden Unbekannten Frischluft und Abgas bestimmt. Darüber hinaus hat es sich als sehr vorteilhaft erwiesen, das oben beschriebene Verfahren mehrere Male auszuführen und die jeweiligen Druckwertepaare bzw. Differenzen der Druckwertpaare für eine anschließende statistische Mittelung über eine gewisse, beispielsweise betriebsparameterabhängige Zeitdauer abzuspeichern. Diese Mittelung ist vor allem deshalb erforderlich, um eventuelle dynamische Vorgänge, die beim Zuschalten der Abgasrückführung aufgetreten sind, zu korrigieren. Außerdem hat es sich als sehr vorteilhaft herausgestellt, die Differenzwerte der Druckwertpaare nur dann abzuspeichern, wenn vor und nach Zuschalten der Abgasrückführung ein stationärer oder nahezu stationärer Motorbetriebszustand vorgelegen hat.

Die aufgrund der beschriebenen Vorrichtung mögliche Istwert-Erfassung der rückgeführten Abgasmenge erlaubt es darüber hinaus, von einer rein gesteuerten Abgasrückführung auf eine geregelte Abgasrückführung überzugehen. Insbesondere bieten sich hierzu adaptive Verfahren an, bei denen die beispielsweise in einem Speicher abgelegten, betriebsparameterabhängigen Vorsteuerwerte durch eine überlagerte Regelung den Langzeitdriften der Regelstrecke nachgeführt werden.

Derartige adaptive Regelverfahren sind in aller Ausführlichkeit in der DE-A-34 08 215 beschrieben und sollen im weiteren nicht in allen Einzelheiten erläutert werden. Insbesondere der spezielle Aufbau des Steuergerätes mit einem Mikrocomputer und den peripheren Einheiten zur Durchführung derartiger adaptiver Strategien ist bereits hinlänglich bekannt, so daß es ein Fachmann auf dem Gebiet der elektronischen Motorsteuerungen und -regelung bei Kenntnis der vorliegenden Erfindung problemlos möglich ist, ein solches Regelkonzept softwaremäßig zu realisieren.

Anhand des groben Flußdiagramms der Figur 2 ist deshalb nur eine schematische Übersicht über die Realisierung des erfindungsgemäßen Verfahrens gegeben werden :

Zu Beginn des Programms wird im Block 40 die Druckdifferenz Dp (AGR, p) auf den Wert Null gesetzt. Nach einer Erfassung des Motorzustandes, beispielsweise der Drehzahl, der Last oder verschiedener Schalterstellungen (Block 41) werden diese Daten im Mikrocomputer abgespeichert (Block 42). Nach einer Erfassung des nächsten Motorzustandes (Block 43) findet in Block 44 die Erfassung des Frischluft-Drucks gemäß der im Block 44 angegebenen Gleichung statt. Als Funktion des Frischluft-Drucks berechnet der Mikrocomputer in Block 45 die zuzumessende Einspritzmenge und gibt diese beispielsweise als eine Zeitdauer aus. Wird die Abfrage in Block 46 auf ein geschlossenes Abgasrückführungs-Ventil mit NEIN beantwortet, so springt das Programm zurück auf Block 42 und durchläuft erneut die Schleife bis Block 46. Ist jedoch das Abgasrückführungs-Ventil geschlossen, so wird die Druckdifferenz Dp mit dem Wert Null belegt (Block 47) und überprüft, ob ein stationärer bzw. quasistationärer Betriebszustand der Brennkraftmaschine vorliegt (48). Ist dies nicht der Fall, so springt das Programm erneut auf Block 42 zurück. Liegt jedoch ein stationärer bzw. quasistationärer Betriebszustand der Brennkraftmaschine vor und soll auch das Abgasrückführungs-Ventil betätigt werden (Block 49), so findet eine Abspeicherung des momentanen Saugrohr-Druck p (Block 50) statt. Falls das Abgasrückführung-Ventil nicht betätigt werden soll, springt das Programm zurück auf Block 42. Nach der Abspeicherung des Saugrohr-Drucks (Block 50), der Drehzahl und verschiedener Schalterstellungen (Block 51) und nach Ablauf einer programmierbaren bzw. einstellbaren Verzögerungszeit, die der Zeitdauer der Abgasrückführungs-Ventilbewegung in etwa entspricht (Block 52), wird erneut der Motorzustand gemäß Block 53 erfaßt. Nach einer Überprüfung, ob vor bzw. nach der Betätigung des Abgasrückführungs-Ventils die Betriebsparameter der Brennkraftmaschine im wesentlichen gleich geblieben sind, ob also ein stationärer bzw. quasistationärer Vorgang vorgelegen hat (Block 54), wird bei Vorliegen eines stationären bzw. quasistationären Betriebszustandes erneut der Saugrohrdruck p gemäß Block 55 abgespeichert. Liegt kein stationärer bzw. quasistationärer Betriebszustand der Brennkraftmaschine vor, so springt das Programm von Block 54 zurück auf Block 41 und das Spiel beginnt von vorne. Entsprechend Block 56 wird die Druckdifferenz des Ansaugrohrunterdrucks mit und ohne Abgasrückführung gebildet und entsprechend Block 57 in Abhängigkeit von der Abgasrückführungs-Ventilbewegung und dem Saugrohrdruck nach einer Plausibilitätsüberprüfung abgelegt. Diese Plausibilitätsüberprüfung ist vor allem deshalb erforderlich um Meßwertverfälschungen aufgrund des eventuellen Vorliegens dynamischer Vorgänge, die beim Zuschalten der Abgasrückführung anwesend waren, zu eliminieren. Diese Plausibilitätsüberprüfung könnte im einfachsten Falle darin bestehen, die Werten des Differenzdrucks mit vorgegebenen Schwellwerten zu vergleichen und Differenzdruckwerte außerhalb eines gewissen Toleranzbandes nicht weiterzuverarbeiten. Weiterhin erweist es sich als vorteilhaft, die aktuellen Druckdifferenzwerte Dp mittels eines adaptiven Regelverfahrens im Kennfeld abzulegen. In diesem Zusammenhang sei auf den Inhalt der DE-A-34 08 215 verwiesen, die als Referenz herangezogen werden kann. Anschließend (58) findet ein Vergleich der momentanen mit der vorhergehenden Druckdifferenz Dp (AGR, p) mit anschließender, beispielsweise statistischer Mittlung statt. Danach springt das Programm zurück zu Block 42 und der beschriebene Ablauf beginnt von vorne.

Da sich die Driften der Abgasrückführungsmenge nur über längere Zeiträume wesentlich bemerkbar machen (Verschmutzung des Abgasrückführungsventils) und der Absolutbetrag der rückgeführten Abgasmenge mit maximal 20 bis 30 % immer nur eine Korrekturgröße darstellt, ist ein sehr rasches Konvergieren eines derartigen adaptiven Verfahrens zu erwarten. Dies insbesondere deshalb, da das Zu- und Abschalten der Abgasrückführung im normalen Fahrbetrieb sehr häufig auftritt.

Insgesamt erweist sich an der erfindungsgemäßen Vorrichtung bzw. dem erfindungsgemäßen Verfahren als vorteilhaft, daß zum einen die Lasterfassung mittels eines einzigen, sehr einfach aufgebauten und damit kostengünstigen Geber möglich ist und daß zum anderen die genaue Menge der rückgeführten Abgasmenge bestimmt werden kann, was sogar bei mit Stellungsgebern ausgerüsteten Abgasrückführungsventilen nicht exakt möglich ist.

**Patentansprüche**

1. Vorrichtung zur Beeinflussung von Betriebskenngrößen von Brennkraftmaschinen mit einem Einlaßkanal (11) mit einer Drosselklappe (12), einem Auslaßkanal für die Abgase der Brennkraftmaschine sowie einem Abgasrückführungskanal (20), der den Auslaßkanal mit dem Einlaßkanal stromab der Drosselklappe verbindet, mit einem Ventil (21) zur Steuerung oder Regelung der rückgeführten Abgasmenge im Abgasrückführungskanal und mit einem einzigen Unterdruckgeber (15) zur Messung des Ansaugunterdrucks im Einlaßkanal unterhalb der Drosselklappe, bei der ein Steuergerät (14) vorgesehen ist, dem Eingangssignale über verschiedene Betriebskenngrößen, zumindest Informationen bezüglich der Drehzahl und dem Ansaugrohrunterdruck der Brennkraftmaschine (10) zugeführt werden und welches Ausgangssignale bezüglich wenigstens einer der Größen zuzumessende Kraftstoffmenge und rückgeführte Abgasmenge erzeugt, wobei der Ermittlung des Wertes der der Brennkraftmaschine für einen bestimmten Betriebszustand zuzumessenden Kraftstoffmenge neben dem Drehzahlsignal wenigstens zwei Meßwerte des Unterdruckgebers zugrundegelegt werden, wobei die wenigstens zwei Meßwerte des Unterdruckgebers zeitlich nacheinander erfaßt werden, dadurch gekennzeichnet, daß die wenigstens zwei Meßwerte bei eingeschalteter und abgeschalteter Abgasrückführung beim tatsächlichen Fahrbetrieb erfaßt werden.

2. Vorrichtung nach Anspruch 1, dadurch gekennzeichnet, daß der Istwert der rückgeführten Abgasmenge über eine Differenzbildung der wenigstens zwei Meßwerte bestimmbar ist.

3. Vorrichtung nach Anspruch 1 oder 2, dadurch gekennzeichnet, daß bei eingeschalteter abgasrückführung die der Brennkraftmaschine (10) zugeführte Frischluftmenge bzw. die zuzumessende Kraftstoffmenge aus den wenigstens zwei Meßwerten, die bei ein- und ausgeschalteter Abgasrückführung ermittelt werden, bestimmbar ist.

4. Vorrichtung nach einem der vorhergehenden Ansprüche, dadurch gekennzeichnet, daß im Steuergerät (14) Speichermittel vorgesehen sind, in denen wenigstens zwei Meßsignale abgespeichert sind.

5. Vorrichtung nach einem der vorhergehenden Ansprüche, dadurch gekennzeichnet, daß im Steuergerät (14) Speichermittel vorgesehen sind, in denen die Differenz der wenigstens zwei Meßsignale abgespeichert ist.

6. Vorrichtung nach einem der vorhergehenden Ansprüche, dadurch gekennzeichnet, daß mehrere Wertpaare der wenigstens zwei Meßsignale (eins mit, eins ohne AGR) abgespeichert werden.

7. Vorrichtung nach Anspruch 6, dadurch gekennzeichnet, daß eine Mittelwertbildung der verschiedenen Wertpaare durchgeführt wird.

8. Vorrichtung nach Anspruch 6 oder 7, dadurch gekennzeichnet, daß eine statistische Mitteilung der verschiedenen Wertpaare durchgeführt wird.

9. Vorrichtung nach einem der Ansprüche 2 bis 8, dadurch gekennzeichnet, daß eine Verarbeitung der wenigstens zwei Meßwerte bzw. Meßwertpaare nur dann erfolgt, wenn ein stationärer bzw. quasistationärer Betriebszustand der Brennkraftmaschine (10) über die Zeitdauer der Meßwerterfassung der wenigstens zwei Meßwerte, insbesondere die gleiche Drehzahl bei der Erfassung des ersten und zweiten Meßwertes, vorgelegen hat.

10. Vorrichtung nach einem der Ansprüche 2 bis 9, dadurch gekennzeichnet, daß eine Verarbeitung der wenigstens zwei Meßwerte bzw. Meßwertpaare nur dann erfolgt, wenn ein stationärer bzw. quasistationärer Zustand der Brennkraftmaschine (10) über die Zeitdauer der Meßwerterfassung der Meßwertpaare der wenigstens zwei Meßwerte, insbesondere die gleiche Drehzahl bei der Erfassung des ersten und zweiten Meßwertes, vorgelegen hat.

11. Vorrichtung nach einem der vorhergehenden Ansprüche, dadurch gekennzeichnet, daß Steuerwerte für die rückzuführende Abgasmenge vorgesehen sind, die über eine auf der Erfassung der wenigstens zwei Meßwerte bzw. Meßwertpaare basierenden Regelung derart nachgeführt werden, daß Driften in der Steuerungsstrecke ausgeglichen werden.

12. Vorrichtung nach Anspruch 11, dadurch gekennzeichnet, daß die betriebsparameterabhängigen Vorsteuerwerte für die rückzuführende Abgasmenge mittels adaptiver Regelverfahren angepaßt werden, derart, daß Driften in der Steuerstrecke kompensiert werden.

13. Verfahren zur Beeinflussung von Betriebskenngrößen von Brennkraftmaschinen, bei dem wenigstens die Betriebskenngrößen-Drehzahl (n) und Ansaugrohrunterdruck der Kraftstoffmengenzumessung zugrundegelegt werden und bei dem eine Rückführung von Abgasen der Brennkraftmaschine in einen Einlaßkanal der Brennkraftmaschine vorgesehen ist, dadurch gekennzeichnet, daß zwei Meßwerte des Ansaugrohrunterdrucks der Brennkraftmaschine für ein- und ausgeschaltete Abgasrückführung nacheinander beim tatsächlichen Fahrbetrieb erfaßt und wenigstens der Ermittlung des Istwertes der rückgeführten Abgasmenge in Verbindung mit der Beeinflussung von Betriebskenngrößen oder der Bestimmung der der Brennkraftmaschine zuzumessenden Kraftstoffmenge zugrundegelegt werden.

14. Verfahren nach Anspruch 13, dadurch gekennzeichnet, daß der Istwert der rückgeführten Abgasmenge für eine Regelung der Abgasrückführungsrate benutzt wird.

15. Verfahren nach Anspruch 13 oder 14, dadurch gekennzeichnet, daß die wenigstens zwei Meßwerte mehrmals erfaßt und anschließend statistisch gemittelt werden.

16. Verfahren nach einem der Ansprüche 13 bis 15, dadurch gekennzeichnet, daß die wenigstens zwei Meßwerte nur bei Vorliegen von über die Meßwerterfassungszeitdauer stationären bzw. quasistationären Betriebesbedingungen der Brennkraftmaschine weiter verarbeitet werden.

**Claims**

1. Device for modifying operating parameters of internal combustion engines having an inlet line (11) with a throttle valve (12), an outlet line for the exhaust gases from the internal combustion engine and an exhaust gas recirculation line which connects the outlet line with the inlet line downstream of the throttle valve, having a valve (21) for controlling or regulating the quantity of recirculated exhaust gas in the exhaust gas recirculation line and having a single vacuum sensor (15) for measuring the intake vacuum in the inlet line below the throttle valve, in which a control device (14) is provided which is supplied with input signals on various operating parameters, at least information relating to the speed and the intake pipe vacuum of the internal combustion engine (10), and which generates output signals relating to at least one of the variables — quantity of fuel to be metered in and quantity of exhaust gas recirculated, the determination of the value of the quantity of fuel to be metered to the internal combustion engine for a particular operating condition being based not only on the speed signal but at least two measured values from the vacuum sensor, the two or more measured values from the vacuum sensor being acquired consecutively, characterized in that the two or more measured values are acquired in actual driving conditions with the exhaust gas recirculation switched on and with it switched off.

2. Device according to Claim 1, characterized in that the actual value of the quantity of exhaust gas recycled can be determined by forming a differential value from the two or more measured values.

3. Device according to Claim 1 or 2, characterized in that the quantity of fresh air supplied to the internal combustion engine (10) and the quantity of fuel to be metered in can be determined with the exhaust gas recirculation switched on from the two or more measured values which are acquired with the exhaust gas recirculation switched on and with it switched off.

4. Device according to any of the preceding claims, characterized in that storage means are provided in the control device (14), at least two measurement signals being stored in these storage means.

5. Device according to any of the preceding claims, characterized in that storage means are provided in the control device (14), the difference between the two or more measurement signals being stored in these storage means.

6. Device according to any of the preceding claims, characterized in that a plurality of pairs of values from the two or more measurement signals (one with, one without EGR) are stored.

7. Device according to Claim 6, characterized in that a mean is formed from the various pairs of values.

8. Device according to Claim 6 and 7, characterized in that a statistical communication (sic) of the various pairs of values is carried out.

9. Device according to any of Claims 2 to 8, characterized in that the two or more measured values or pairs of measured values are processed only if a steady-state or a quasi steady-state operating condition of the internal combustion engine (10) existed over the period of measured value acquisition of the two or more measured values, in particular if the same speed existed during the acquisition of the first and the acquisition of the second measured value.

10. Device according to any of Claims 2 to 9, characterized in that the two or more measured values or pairs of measured values are processed only if a steady-state or quasi steady-state condition of the internal combustion engine (10) existed over the period of measured value acquisition of the pairs of measured values formed from the two or more measured values, in particular if the same speed existed during the acquisition of the first and the acquisition of the second measured value.

11. Device according to any of the preceding claims, characterized in that control values are provided for the quantity of exhaust gas to be recycled and are adapted accordingly via regulation based on the acquisition of the two or more measured values or pairs of measured values, in such a way that drifts in the controlled system are compensated.

12. Device according to Claim 11, characterized in that the operating parameter-dependent precontrol values are adapted for the quantity of exhaust gas to be recirculated by means of adaptive regulation methods such that drifts in the controlled system are compensated.

13. Method for modifying operating parameters of internal combustion engines, in which at least the operating parameters of speed (10) and intake pipe vacuum are taken as a basis for the quantity of fuel metered in and in which recirculation of exhaust gases to the internal combustion engine is provided in an inlet line of the internal combustion engine, characterized in that in actual driving conditions, two measured values for the intake pipe vacuum of the internal combustion engine are acquired in succession for switched-on and switched-off exhaust gas recirculation and are taken as basis at least for the determination of the actual value of the quantity of recirculated exhaust gas in conjunction with the modification of operating parameters or the determination of the quantity of fuel to be metered to the internal combustion engine.

14. Method according to Claim 13, characterized in that the actual value of the quantity of recirculated exhaust gas is used for regulating the rate of exhaust gas recirculation.

15. Method according to Claim 13 or 14, characterized in that the two or more measured values are acquired several times and are subsequently subjected to statistical mean formation.

16. Method according to any of Claims 13 to 15, characterized in that the two or more measured values are processed further only if steady-state or quasi steady-state internal combustion engine operating conditions existed over the period of measured value acquisition.


**Revendications**

1. Dispositif pour influencer les paramètres de fonctionnement de moteurs à combustion interne comportant un canal d'admission (11) équipé d'un papillon, d'un canal d'échappement (12) pour les gaz d'échappement du moteur à combustion interne ainsi que d'un canal de réinjection de gaz d'échappement (20) qui relie le canal d'échappement au canal d'admission en aval du papillon, une vanne (21) pour commander ou réguler la quantité de gaz d'échappement réinjectée par le canal de réinjection de gaz d'échappement ainsi qu'un seul capteur de dépression pour mesurer la dépression d'aspiration dans le canal d'admission en aval du papillon, avec un appareil de commande qui reçoit comme signaux d'entrée les différents paramètres de fonctionnement au moins des informations relatives à la vitesse de rotation et à la dépression dans la tubulure d'aspiration du moteur à combustion interne (10) et qui fournit des signaux de sortie relatifs à au moins l'une des grandeurs à savoir la quantité de carburant et la quantité de gaz d'échappement réinjectées, et pour déterminer la valeur de la quantité de carburant qu'il faut fournir de manière dosée au moteur à combustion interne pour un état de fonctionnement déterminé ainsi que le signal de vitesse de rotation et utilisant au moins deux grandeurs de mesure du capteur de dépression, ces deux grandeurs de mesure du capteur de dépression étant saisies successivement dans le temps, dispositif caractérisé en ce que ces deux grandeurs de pression sont saisies pendant le fonctionnement en déplacement réel lorsque la réinjection de gaz d'échappement est branchée et lorsqu'elle est coupée.

2. Dispositif selon la revendication 1, caractérisé en ce que la valeur réelle de la quantité de gaz d'échappement réinjectée se détermine en formant la différence entre au moins les deux grandeurs de mesure.

3. Dispositif selon la revendication 1 ou 2, caractérisé en ce que pour la réinjection de gaz d'échappement mise en œuvre, la quantité d'air frais alimentant le moteur à combustion interne ou la quantité de carburant à doser se détermine à partir d'au moins deux grandeurs de mesure qui sont fournies lorsque la réinjection de gaz d'échappement est coupée et lorsqu'elle est mise en œuvre.

4. Dispositif selon l'une quelconque des revendications précédentes, caractérisé par une mémoire prévue dans l'appareil de commande (14), mémoire dans laquelle on inscrit au moins les deux signaux de mesure.

5. Dispositif selon l'une quelconque des revendications précédentes, caractérisé par une mémoire prévue dans l'appareil de commande (14), dans laquelle on inscrit la différence d'au moins deux signaux de mesure.

6. Dispositif selon l'une quelconque des revendications précédentes, caractérisé en ce qu'on inscrit plusieurs paires de grandeurs des deux signaux de mesure (l'un avec réinjection de gaz d'échappement, l'autre sans réinjection de gaz d'échappement).

7. Dispositif selon la revendication 6, caractérisé en ce qu'on forme la moyenne des différentes paires de grandeurs de mesure.

8. Dispositif selon la revendication 6 ou la revendication 7, caractérisé en ce qu'on fait une moyenne statistique des différentes paires de grandeurs de mesure.

9. Dispositif selon l'une quelconque des revendications 2 à 8, caractérisé en ce qu'on traite au moins les deux grandeurs de mesure ou paires de grandeurs de mesure au cas où il a existé un état de fonctionnement stationnaire ou quasi-stationnaire du moteur à combustion interne (10) pendant la durée de la saisie d'au moins ces deux grandeurs de mesure notamment la même vitesse de rotation lors de la saisie de la première et la seconde grandeur de mesure.

10. Dispositif selon l'une des revendications 2 à 9, caractérisé en ce qu'on traite au moins les deux grandeurs de mesure ou les paires de grandeurs de mesure si le moteur à combustion interne (10) a été dans un état stationnaire ou quasi-stationnaire pendant la durée de la saisie des paires de grandeurs de mesure des deux grandeurs de mesure en particulier la même vitesse de rotation lors de la saisie de la première et de la seconde grandeur de mesure.

11. Dispositif selon l'une des revendications précédentes, caractérisé en ce qu'on a des grandeurs de mesure pour la quantité de gaz d'échappement à réinjecter, et qui est asservie par une régulation reposant sur la saisie d'au moins deux grandeurs de mesure ou paire de grandeurs de mesure pour compenser la dérive dans le chemin de commande.

12. Dispositif selon la revendication 11, caractérisé en ce que les grandeurs de mesure préalables dépendant des paramètres de fonctionnement pour la quantité de gaz d'échappement à réinjecter sont adaptées par un procédé de régulation par adaptation de manière à compenser la dérive du chemin de commande.

13. Procédé pour influencer les paramètres de fonctionnement de moteurs à combustion interne reposant au moins sur la vitesse de rotation (n) comme paramètres de fonctionnement et la dépression dans la tubulure d'aspiration pour le dosage en carburant, et avec une réinjection de gaz d'échappement du moteur à combustion interne dans le canal d'admission du moteur, procédé caractérisé en ce qu'on saisit successivement et pour un fonctionnement réel, les deux grandeurs de mesure de la dépression dans la tubulure d'aspiration du moteur à combustion interne à la fois lorsque la réinjection des gaz d'échappement est coupée et lorsqu'elle est mise en œuvre et on utilise la valeur réelle de la quantité de gaz d'échappement réinjectée en liaison avec l'influence des paramètres de fonctionnement ou de la détermination de la quantité de carburant à doser pour le moteur à combustion interne.

14. Procédé selon la revendication 13, caractérisé en ce que la valeur réelle de la quantité de gaz d'échappement réinjectée est utilisée pour réguler le coefficient de réinjection des gaz d'échappement.

15. Procédé selon la revendication 13 ou la

7

revendication 14, caractérisé en ce qu'on saisit plusieurs fois au moins deux grandeurs de mesure, puis on en fait une moyenne statistique.

16. Procédé selon l'une des revendications 13 à 15, caractérisé en ce que l'on poursuit le traitement d'au moins deux grandeurs de mesure en présence de conditions de fonctionnement stationnaires ou quasi-stationnaires du moteur à combustion interne et qui s'étendent au-delà de la durée de la saisie des grandeurs de mesure.

# FIG. 1

| | |
|---|---|
| Dp(AGR,p) = 0 | ～40 |
| Erfassung des Motorzustandes M (ti) (z.B. Drehzahl n (ti), Last p (ti), Schalter usw.) | ～41 |
| Abspeichern des derzeitigen Motor- zustandes m(ti-1) = M(ti) | ～42 |
| Erfassung des nächsten Motorzu- standes M(ti) | ～43 |
| Frischluft-Druck berechen F(ti) = p(ti) - Dp(AGR,p) | ～44 |
| Einspritzmenge als Funktion von F(ti) - berechnen und ausgeben | ～45 |
| Ist AGR-Ventil geschlossen? | ～46 |
| Dp(AGR,p) = 0 | ～47 |
| Ist der Unterschied M(ti) - M(ti-1) gering? (Stationärer Zustand?) M(ti) - M(ti-1) < Schwelle? | ～48 |
| Soll das AGR Ventil betätigt werden? | ～49 |
| Saugrohr-Druck p(ti) abspeichern | ～50 |
| Drehzahl n(ti) und Schalter (ti) usw. abspeichern | ～51 |
| Programmierbare Verzögerungszeit ab- warten (etwa bis Abschluß der AGR- Ventilbewegung) | ～52 |
| Motorzustand M(ti+1) erfassen | ～53 |
| Sind Drehzahl und Schalterstellung gleich geblieben? n(ti+1) - n(ti) < Schwelle? Schalter (ti+1) = schalter(ti)? | ～54 |
| Saugrohrdruck p(ti+1) abspeichern | ～55 |
| Druckdifferenz Dp = p(ti+1) - p(ti) bilden | ～56 |
| Druckdifferenz Dp(AGR,p) in Abhängig- keit der AGR-Ventil-Bewegung des Saugrohrdruckes p(ti) nach Plausibi- litätsüberprüfung ablegen | ～57 |
| Dp(AGR,p) mit vorhergehenden Dp(AGR, p) vergleichen und mitteln | ～58 |

Ⓝ

FIG. 2

AGR = Abgasrückführung
Ⓝ = Nein
Dp = Druckdifferenz

2